# DEMANDE DE BREVET EUROPEEN

(11) **EP 0 972 625 A1**
(43) Date de publication de la demande: **19.01.2000**
(21) Numéro de dépôt: 98401775.6
(22) Date de dépôt: 13.07.1998
(51) Int. Cl.: B29C 41/18, B29C 41/22, B29C 33/00, B29C 41/34

(54) **Installation de fabrication d'une peau de revêtement en matière plastique d'une pièce d'équipement de véhicule automobile**

(71) Demandeur: ECIA - EQUIPEMENTS ET COMPOSANTS POUR L'INDUSTRIE AUTOMOBILE, F-25400 Audincourt (FR)
(72) Inventeur: Louys, françois, 25350 Mandeure (FR)
(74) Mandataire: Habasque, Etienne Joel Jean-François

(57) **Abrégé**

Cette installation comporte une coquille (1) de moulage de la peau adaptée pour être associée lors d'une première étape de fabrication, à des moyens de masquage (2) d'une première zone (3) de cette coquille et à des premiers moyens (4) de dépôt d'une première matière plastique (5) sur une seconde zone (6) non masquée de cette coquille, pour permettre la formation sur celle-ci, d'une première portion (7) de peau et lors d'une seconde étape de fabrication, après dégagement des moyens de masquage (2), à des seconds moyens de dépôt d'une seconde matière plastique sur la première zone (3) de la coquille (1) et sur au moins une partie de la première portion de peau (7), afin de former sur cette première zone de la coquille, une seconde portion de peau, reliée à la première portion de peau.

## Description

La présente invention concerne une installation de fabrication d'une peau de revêtement en matière plastique d'une pièce d'équipement de véhicule automobile.

Une telle pièce d'équipement de véhicule automobile peut par exemple être une planche de bord de véhicule automobile qui comporte alors une armature de support sur laquelle est disposée une couche de mousse de rembourrage, elle-même recouverte d'une peau de revêtement en matière plastique.

Dans l'état de la technique, l'armature de support et la peau sont réalisées séparément l'une de 1' autre, puis disposées dans un moule de moussage dans lequel est injectée une mousse de matière plastique pour constituer la couche de mousse de rembourrage entre l'armature et la peau.

Il existe déjà dans l'état de la technique, de très nombreux documents qui se rapportent à des procédés et des installations de fabrication de peau de revêtement en général.

On pourra par exemple se reporter au document GB-A-968 760, qui décrit une telle installation qui comporte une coquille de moulage de la peau adaptée pour être associée au moins lors d'une première étape de fabrication de la peau, à des moyens de masquage d'au moins une première zone de cette coquille et à des premiers moyens de dépôt d'une matière plastique d'une première couleur sur une seconde zone non masquée de cette coquille, pour permettre la formation sur cette seconde zone de la coquille, d'une première portion de peau d'une première couleur.

Lors d'une seconde étape de fabrication de la peau, après dégagement des moyens de masquage de la première zone de la coquille, cette coquille est alors associée à des seconds moyens de dépôt d'une matière plastique d'une seconde couleur sur la première zone de la coquille et sur au moins une partie de la première portion de peau formée sur la seconde zone de cette coquille, afin de former sur cette première zone de la coquille, une seconde portion de peau de la seconde couleur, reliée à la première portion de peau par la matière plastique déposée sur celle-ci.

Ceci permet alors d'obtenir une peau de revêtement d'une seule pièce comportant au moins deux portions de couleurs différentes et des segments à une couche et à deux couches de matière plastique.

Le document FR-A-1 560 675 décrit quant à lui un procédé de rotomoulage d'une peau en matière plastique, dans lequel on chauffe une coquille de moulage de la peau, on associe cette coquille à un bac à poudre de matière plastique et on fait tourner ce bac à poudre et cette coquille pour former sur la coquille, la peau correspondante.

Dans ce cas, la peau est réalisée d'une seule pièce mais d'une seule couleur.

Il est également précisé dans ce document que la coquille présente par exemple des motifs ou des lignes de style que l'on souhaite imprimer à la peau formée.

Le document EP-A-0 162 594 propose un perfectionnement à ce procédé qui permet d'obtenir une peau comportant des portions de couleurs différentes.

A cet effet, on propose dans ce document d'utiliser des moyens formant diviseur de moule qui divisent celui-ci en au moins deux surfaces de coulage permettant le dépôt de matières plastiques de couleurs différentes sur celles-ci et des moyens de contrôle de l'écoulement de la matière plastique à partir d'au moins l'une de ces portions de peau pour constituer un Joint intégré entre le plastique coulé sur les surfaces de coulage distinctes.

A cet effet, on prévoit dans le ou chaque bac à poudre utilisé dans ce procédé, une cloison ou paroi de division de celui-ci.

C'est ainsi par exemple que selon un exemple de réalisation décrit dans ce document, on associe dans un premier temps à une coquille de moulage, un premier bac à poudre comportant une cloison de division de celui-ci en deux compartiments, dont l'un reçoit une poudre de matière plastique d'une première couleur. On réalise alors lors d'une opération de rotomoulage, le dépôt de cette matière plastique de cette première couleur sur une première surface de coulage de la coquille pour obtenir la première portion de peau.

Ensuite, la coquille est associée à un second bac à poudre comportant une cloison de division délimitant dans celui-ci deux compartiments dont l'un est adapté pour recevoir une matière plastique d'une seconde couleur.

La cloison de division de ce second bac à poudre est décalée par rapport à celle du premier bac ce qui permet lors d'une seconde opération de rotomoulage, de déposer de la matière plastique de la seconde couleur non seulement sur la seconde surface de coulage correspondante de la coquille, mais également sur un bord de la première portion de peau formée sur la première surface de coulage de celle-ci, afin d'obtenir une peau d'une seule pièce à joint intégré.

On connaît également du document EP-A-0 183 344, un autre procédé de rotomoulage pour réaliser de telles peaux.

Dans ce cas également, la coquille de moulage et le bac à poudre correspondant comprennent des moyens de division de ceux-ci respectivement en deux surfaces de coulage et en deux compartiments, adaptés pour recevoir des matières plastiques de couleurs différentes.

Dans le procédé décrit dans ce document, les moyens de division du bac à poudre permettent lors d'une première étape de fabrication, de protéger uns surface formant diviseur de la coquille pour n'autoriser le dépôt de matières plastiques que sur les première et seconde surfaces de coulage de la coquille.

Les dépôts de matières plastiques sur ces surfaces sont alors réalisés simultanément lors d'une opération de rotomoulage.

Après cette opération de rotomoulage, le bac à poudre est retiré de la coquille pour faire apparaître la surface de division de la coquille et permettre le dépôt sur celle-ci d'une matière plastique permettant de réaliser un moyen de connexion pour relier la matière plastique coulée sur les première et seconde surfaces de coulage de la coquille et obtenir une peau d'une seule pièce.

Le document EP-A-0 339 222 décrit quant à lui un perfectionnement au procédé décrit dans le document mentionné précédemment, dans lequel on dispose à l'extrémité de la cloison de division du bac à poudre, un dispositif d'étanchéité qui comprend un joint gonflable permettant d'améliorer la protection de la surface de division de la coquille.

Enfin, le document EP-A-0 476 742 décrit un autre procédé de ce type, dans lequel l'extrémité de la cloison de division du bac à poudre est munie de moyens d'étanchéité par exemple gonflables, comportant une baguette d'étanchéité profilée, moulée au préalable directement sur la coquille puis fixée sur cette cloison, pour pouvoir épouser parfaitement la forme de celle-ci.

Le but de l'invention est de proposer des perfectionnements au document GB-A-968 760 mentionné précédemment, permettant de résoudre des problèmes rencontrés pour mettre en oeuvre les différents procédés décrits précédemment.

En effet, dans le document GB mentionné précédemment, on utilise lors d'une première étape de fabrication de la peau, des moyens de masquage d'au moins une première zone de la coquille de moulage de la peau.

On conçoit cependant que de tels moyens de masquage nécessitent d'une part une manipulation particulière pour leur mise en place sur la coquille avant l'opération de moulage de la portion de peau correspondante et leur retrait avant l'opération de moulage de la seconde portion de peau.

De plus, de tels moyens de masquage doivent être maintenus en position de manière précise sur la coquille lors du dépôt de la première portion de peau.

On conçoit alors que ceci présente un certain nombre d'inconvénients notamment au niveau du temps requis pour monter et démonter ces moyens de masquage et de la difficulté de centrage de ceux-ci sur la coquille.

Le but de l'invention est donc de résoudre ces problèmes.

A cet effet, l'invention a pour objet une installation de fabrication d'une peau de revêtement en matière plastique d'une pièce d'équipement de véhicule automobile, du type comportant une coquille de moulage de la peau adaptée pour être associée au moins lors d'une première étape de fabrication de la peau, à des moyens de masquage d'au moins une première zone de cette coquille et à des premiers moyens de dépôt d'une première matière plastique sur une seconde zone non masquée de cette coquille, pour permettre la formation sur cette seconde zone de la coquille, d'une première portion de peau et lors d'une seconde étape de fabrication de la peau, après dégagement des moyens de masquage de la première zone de la coquille, à des seconds moyens de dépôt d'une seconde matière plastique sur la première zone de la coquille et sur au moins une partie de la première portion de peau formée sur la seconde zone de cette coquille, afin de former sur cette première zone de la coquille, une seconde portion de peau, reliée à la première portion de peau par la matière plastique déposée sur celle-ci, en vue d'obtenir une peau de revêtement d'une seule pièce comportant au moins deux portions de peau et des segments à une couche et à deux couches de matière plastique, caractérisée en ce que les premiers et seconds moyens de dépôt de matière plastique sur la coquille comprennent des premier et second bacs à extrémités ouvertes, de réception de matière plastique, adaptés pour être associés successivement lors de première et seconde opérations de rotomoulage, à la coquille, le premier bac de réception de matière plastique étant associé à un voile en forme d'écran constituant les moyens de masquage de la première zone de la coquille, adapté pour s'étendre entre une partie de l'extrémité ouverte de ce premier bac et cette première zone de la coquille pour empêcher le dépôt de matière plastique sur cette première zone lors de la première étape de fabrication de la peau et permettre la mise en place et le dégagement de ces moyens de masquage lors du montage et du démontage du premier bac et de la coquille.

Avantageusement, le voile en forme d'écran porte au moins au niveau de son bord, des moyens d'étanchéité adaptés pour venir en appui contre la coquille lorsque celle-ci est montée sur le premier bac pour éviter tout dépôt de matière plastique sur la première zone de cette coquille lors de la première étape de fabrication de la peau.

Ces moyens d'étanchéité peuvent comporter au moins un joint d'appui sur la coquille, fixé de façon démontable sur le reste de ceux-ci pour permettre son remplacement.

De plus, ces moyens d'étanchéité peuvent comporter au moins une partie durcissable in situ lorsque la coquille est montée sur le premier bac à poudre, pour permettre la mise de ces moyens d'étanchéité à la forme exacte de la coquille.

Enfin, le voile en forme d'écran peut également comporter des moyens d'isolation thermique pour limiter la baisse de la température de la première zone de la coquille lors de la première étape de fabrication de la peau et accoster cette coquille au niveau d'une ligne de style de celle-ci.

L'invention sera mieux comprise à l'aide de la description qui va suivre donnée uniquement à titre d'exemple et faite en se référant aux dessins annexés, sur lesquels :
- les figures 1 et 2 illustrent la structure et le fonctionnement d'une installation de la fabrication d'une peau de revêtement en matière plastique d'une pièce d'équipement de véhicule automobile ;
- la figure 3 représente une vue en coupe d'une peau de revêtement obtenue dans une telle installation ; et
- les figures 4 à 8 représentent différents exemples de réalisation de moyens d'étanchéité utilisés dans une telle installation.

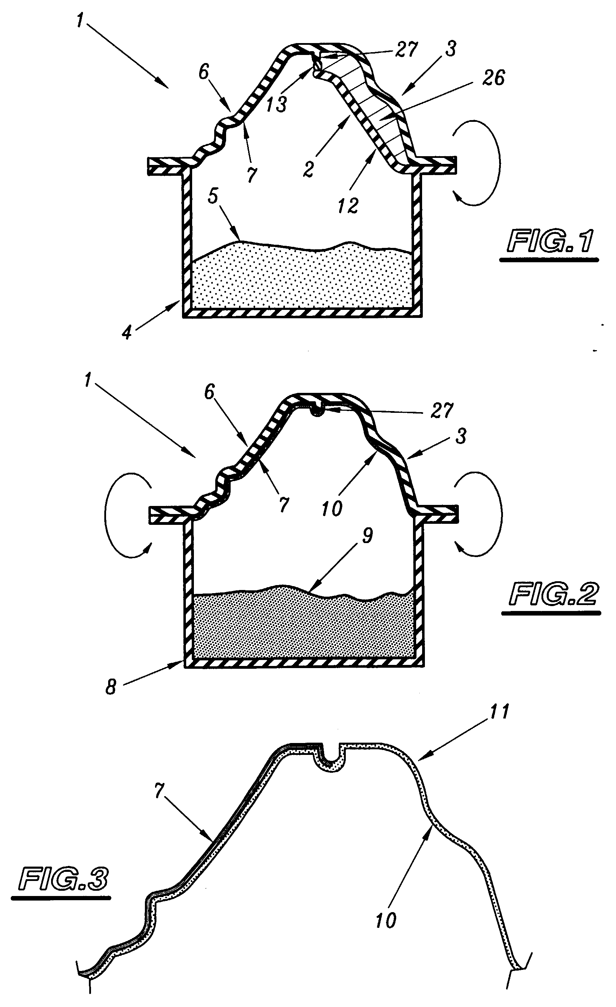

Comme on peut le voir sur les figures 1,2 et 3, une installation selon l'invention permet de fabriquer une peau de revêtement en matière plastique d'une pièce d'équipement de véhicule automobile.

Cette peau de revêtement peut par exemple être destinée à revêtir une planche de bord de véhicule automobile.

Comme on l'a déjà décrit précédemment, une telle planche de bord comporte par exemple une armature de support sur laquelle est prévue une couche de mousse de rembourrage elle-même recouverte d'une peau de revêtement.

L'installation de fabrication de cette peau comporte alors une coquille de moulage de la peau désignée par la référence générale 1 sur les figures 1 et 2, adaptée pour être associée au moins lors d'une première étape de fabrication de la peau, illustrée sur la figure 1, à des moyens de masquage désignés par la référence générale 2 sur cette figure 1, d'au moins une première zone de cette coquille, désignée par la référence générale 3 et à des premiers moyens, désignés par la référence générale 4, de dépôt d'une première matière plastique 5 par exemple d'une première couleur sur une seconde zone 6 non masquée de cette coquille 1, pour permettre la formation sur cette seconde zone 6 de la coquille, d'une première portion de peau 7 par exemple d'une première couleur.

Lors d'une seconde étape de fabrication de la peau illustrée sur la figure 2, après dégagement des moyens de masquage 2 de la première zone 3 de la coquille, cette coquille est adaptée pour être associée à des seconds moyens de dépôt 8 d'une seconde matière plastique 9 par exemple d'une seconde couleur, sur la première zone 3 de la coquille et sur au moins une partie de la première portion de peau 7 formée sur la seconde zone 6 de cette coquille, afin de former sur cette première zone 3 de la coquille une seconde portion de peau 10 par exemple de la seconde couleur, reliée à la première portion de peau 7 par la matière plastique déposée sur celle-ci.

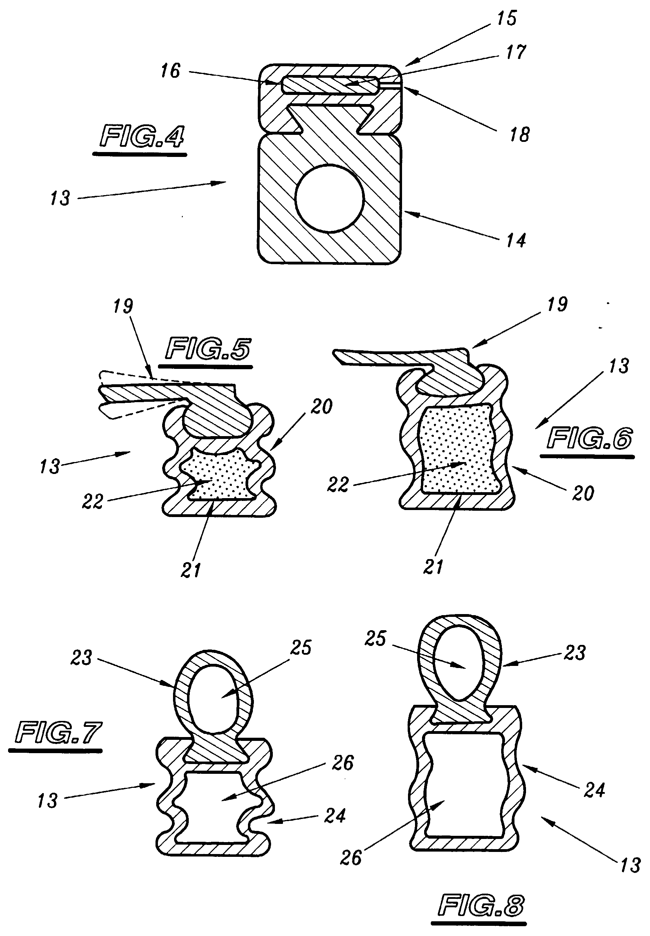

Ceci permet alors d'obtenir comme on peut le voir sur la figure 3, une peau de revêtement 11 d'une seule pièce comportant au moins deux portions de peau 7 et 10 par exemple de couleurs différentes et des segments de matière plastique à une couche au niveau de la portion 10 de la peau et à deux couches au niveau de la portion 7 de la peau.

Dans l'exemple décrit, on considère que les première et seconde matières plastiques présentent des couleurs différentes pour former des portions de peau de couleurs différentes.

Cependant, des matières plastiques se distinguant par une caractéristique autre que leur couleur peuvent également être déposées en utilisant l'installation selon l'invention.

C'est ainsi par exemple que des matières plastiques présentant des natures différentes peuvent être utilisées pour adapter les portions de peau formées à l'environnement de la pièce d'équipement et optimiser l'utilisation des matières plastiques.

Ceci est par exemple le cas pour une planche de bord de véhicule automobile dont les parties supérieure et inférieure de la peau de revêtement sont soumises à des contraintes différentes.

En fait, les premiers et seconds moyens de dépôt de matière plastique sur la coquille, désignés par les références 4 et 8 sur ces figures 1 et 2, peuvent comporter des premier et second bacs à extrémités ouvertes, de réception de matière plastique, adaptés pour être associés successivement lors de première et seconde opérations de rotomoulage, à la coquille 1.

Le premier bac de réception de matière plastique 4 est alors associé à un voile 12 en forme d'écran constituant les moyens de masquage 2 de la première zone 3 de la coquille.

Ce voile 12 en forme d'écran est alors adapté pour s'étendre entre une partie de l'extrémité ouverte de ce premier bac 4 et cette première zone 3 de la coquille pour empêcher le dépôt de matière plastique sur cette première zone 3, lors de la première étape de fabrication de la peau, en permettant la mise en place et le dégagement de ces moyens de masquage lors du montage et du démontage du premier bac 4 et de la coquille 1.

On conçoit alors que la mise en place et le dégagement de ces moyens de masquage se font lors du montage et du démontage de la coquille 1 et du bac de réception de matière plastique 4, ce qui permet d'une part d'augmenter les cadences de production et d'autre part d'assurer un positionnement automatique et précis de ces moyens de masquage par rapport à la coquille dans la mesure où ils sont associés au bac qui est lui-même associé à la coquille lors de la première étape de fabrication de la peau.

La matière plastique contenue dans les bacs 4 et 8 peut par exemple se présenter sous la forme d'une poudre de matière plastique de type classique.

De plus, le voile en forme d'écran désigné par la référence générale 12 sur la figure 1, porte au moins au niveau de son bord, des moyens d'étanchéité désignés par la référence générale 13 sur la figure 1, adaptés pour venir en appui contre la coquille 1, lorsque celle-ci est montée sur le premier bac 4, pour éviter tout dépôt de matière plastique sur la première zone 3 de cette coquille lors de la première étape de fabrication de la peau.

Ces moyens d'étanchéité peuvent comporter des moyens déformables élastiquement qui peuvent être sollicités par des moyens de génération d'une pression/dépression contre la coquille.

Cependant, ces moyens déformables élastiquement peuvent également être sollicités par des moyens élastiques contre la coquille, comme par exemple par des moyens à ressort ou autres.

Dans le cas où les moyens déformables élastiquement sont sollicités par des moyens de génération d'un pression/dépression contre la coquille, ceux-ci peuvent alors comporter par exemple un joint gonflable ou autre, de type classique.

On a représenté sur les figures 4 à 8, différents modes de réalisation de tels moyens d'étanchéité.

C'est ainsi par exemple que sur la figure 4, on reconnaît les moyens d'étanchéité 13 déformables élastiquement sollicités par des moyens de génération d'une pression/dépression contre la coquille.

Dans l'exemple illustré sur cette figure, ces moyens d'étanchéité 13 comportent en fait un joint gonflable désigné par la référence générale 14 et muni d'au moins un joint d'appui sur la coquille, désigné par la référence générale 15, fixé de façon démontable sur le reste de ceux-ci pour permettre son remplacement, par exemple en cas d'usure ou autre.

Dans l'exemple de réalisation représenté sur cette figure, ce joint d'appui 15 est fixé sur le reste 14 de ces moyens d'étanchéité 13 par l'intermédiaire d'un mécanisme à queue d'aronde.

Il va de soi bien entendu que d'autres modes de réalisation de ces moyens de fixation démontable du joint d'appui sur le reste des moyens d'étanchéité peuvent être envisagés.

De plus, ces moyens d'étanchéité peuvent également comporter au moins une partie durcissable in situ lorsque la coquille est montée sur le premier bac pour permettre la mise de ces moyens d'étanchéité à la forme exacte de la coquille.

Dans l'exemple de réalisation représenté sur cette figure 4, la partie durcissable in situ des moyens d'étanchéité est prévue dans le joint d'appui 15 de ceux-ci.

C'est ainsi par exemple que ce joint d'appui 15 peut comporter au moins un canal désigné par la référence générale 16 s'étendant le long d'au moins une partie de ce joint d'appui 15 et dans lequel est disposée une matière durcissable in situ désignée par la référence générale 17.

Ce joint peut alors comporter des orifices de décharge désignés par la référence générale 18 permettant l'évacuation du trop-plein de matière.

On conçoit alors que lorsque la coquille 1 est montée pour la première fois sur un premier bac 4, on peut appliquer de manière très précise les moyens d'étanchéité 13 et plus particulièrement le joint d'appui 15 contre la coquille.

Ceux-ci épousent alors parfaitement la forme de la coquille 1 et la matière durcissable 17 de ces moyens d'étanchéité 13 est durcie in situ contre la coquille 1 ce qui permet d'obtenir une étanchéité et une adaptation parfaites entre la coquille et le premier bac.

Il va de soi bien entendu que différents modes de réalisation de ces moyens d'étanchéité peuvent être envisagés comme celui représenté sur les figures 5 et 6.

On reconnaît toujours sur ces figures les moyens d'étanchéité désignés par la référence générale 13, qui comportent un joint d'appui désigné par la référence générale 19 sur ces figures, adapté pour venir en appui contre la coquille et qui se présente dans cet exemple sous la forme d'une lèvre élastique fixée de manière démontable sur le reste de ces moyens d'étanchéité, désigné par la référence générale 20.

La fixation démontable de cette lèvre sur le reste des moyens d'étanchéité peut être assurée par tout moyen approprié permettant le remplacement de cette lèvre lorsque celle-ci est usée par exemple.

Dans l'exemple de réalisation représenté sur ces figures 5 et 6, ces moyens d'étanchéité comportent également une partie durcissable in situ lorsque la coquille 1 est montée sur le premier bac 4 pour permettre la mise de ces moyens d'étanchéité à la forme exacte de la coquille.

Dans le cas illustré sur ces figures 5 et 6, cette partie durcissable in situ des moyens d'étanchéité est prévue dans le reste 20 de ceux-ci.

Dans ce cas, ces moyens d'étanchéité comportent alors au moins un canal désigné par la référence générale 21 s'étendant le long d'au moins une partie de ceux-ci et dans lequel est disposée une matière durcissable in situ désignée par la référence générale 22.

Dans le cas illustré sur ces figures, cette matière durcissable 22 peut par exemple être injectée sous pression dans ce canal 21 des moyens d'étanchéité pour d'une part, assurer un contact optimum entre ceux-ci et la coquille et d'autre part, remplir ce canal pour permettre une fois la matière 22 durcie à l'intérieur de ces moyens, d'obtenir des moyens d'étanchéité épousant parfaitement le profil de la coquille 1.

Enfin, sur les figures 7 et 8, on a représenté un autre exemple de réalisation de ces moyens d'étanchéité 13, dans lesquelles on peut constater que ceux-ci comportent toujours un joint d'appui désigné par la référence générale 23 sur ces figures, fixé de façon démontable sur le reste 24 de ces moyens d'étanchéité, l'un et l'autre de ces éléments comportant au moins un canal s'étendant le long d'au moins une partie de ceux-ci, désignés par les références 25 et 26, et dont l'un est adapté pour recevoir de la matière durcissable in situ et dont l'autre est adapté pour être relié à des moyens de génération d'une pression/dépression, pour obtenir un appui optimal de ces moyens d'étanchéité contre la coquille, par exemple.

On conçoit alors que cette structure présente un certain nombre d'avantages car d'une part seul le joint d'appui fixé de façon démontable sur le reste des moyens d'étanchéité doit être changé en cas d'usure, et d'autre part les moyens d'étanchéité peuvent épouser parfaitement la forme de la coquille après durcissage in situ d'une partie au moins de ces moyens d'étanchéité.

Si l'on revient maintenant à la figure 1, on peut constater également que le voile en forme d'écran désigné par la référence générale 12, peut également porter des moyens d'isolation thermique désignés par la référence générale 26 sur cette figure 1, permettant de limiter la baisse de la température de la première zone 3 de la coquille 1 lors de la première étape de fabrication de la peau.

Ces moyens d'isolation thermique 26 peuvent présenter n'importe quelle structure appropriée et l'on conçoit que ceci permet d'améliorer la qualité de la peau obtenue.

On sait en effet que la qualité de la peau de revêtement obtenue dépend de la température de la coquille. Or, cette température est relativement difficile à contrôler, dans la mesure où si celle-ci est trop chaude on risque de "brûler" la peau, tandis que si celle-ci est trop froide on risque une mauvaise fusion de la matière plastique.

Or, une telle coquille est chauffée avant les opérations de rotomoulage et l'on conçoit qu'il est important de chauffer suffisamment celle-ci pour que sa température soit suffisante lors du moulage de la seconde portion de peau, tout en étant limitée pour éviter de dégrader la qualité de la première portion de peau.

Les moyens d'isolation thermique 26 portés par ce voile en forme d'écran 12 permettent de résoudre une partie de ces problèmes en limitant la baisse de la température de la zone correspondante de la coquille lors de cette première étape, ce qui permet de mieux contrôler la température initiale à laquelle doit être chauffée celle-ci.

Dans l'exemple de réalisation représenté sur cette figure 1, on peut également constater que le voile en forme d'écran 12 est venu de matière avec le premier bac 4, c'est-à-dire que ceux-ci sont réalisés d'une seule pièce.

Il va de soi cependant que d'autres modes de réalisation de ce voile peuvent être envisagés et que celui-ci peut être réalisé séparément du premier bac et relié à celui-ci lors de la première étape de fabrication de la peau par tous moyens de centrage et de fixation appropriés permettant de garantir un bon positionnement de ces moyens de masquage par rapport à la coquille, lorsque celle-ci est montée sur le premier bac.

Enfin, on notera que de façon classique, ce voile 12 et les moyens d'étanchéité 13 peuvent être adaptés pour accoster la coquille 1 au niveau d'une ligne de style de celle-ci, constituée par exemple par une nervure ou autres de la coquille, désignée par la référence générale 27 sur les figures 1 et 2.

De telles lignes de style ont déjà été réalisées dans l'état de la technique sur des peaux de revêtement pour permettre par exemple de simuler une couture ou de fixer sur la planche de bord, dans une partie en creux correspondante de celle-ci, une baguette de décoration ou autre.

On conçoit alors qu'avec une telle installation, il est possible de former une peau de revêtement d'une seule pièce comportant au moins deux portions de peau de matières plastiques présentant au moins une caractéristique différente, c'est-à-dire une couleur, une nature, etc... différente.

## Revendications

1. Installation de fabrication d'une peau de revêtement en matière plastique d'une pièce d'équipement de véhicule automobile, du type comportant une coquille (1) de moulage de la peau adaptée pour être associée au moins lors d'une première étape de fabrication de la peau, à des moyens de masquage (2) d'au moins une première zone (3) de cette coquille (1) et à des premiers moyens (4) de dépôt d'une première matière plastique (5) sur une seconde zone (6) non masquée de cette coquille (1), pour permettre la formation sur cette seconde zone (6) de la coquille, d'une première portion de peau (7) et lors d'une seconde étape de fabrication de la peau, après dégagement des moyens de masquage (2) de la première zone de la coquille, à des seconds moyens (8) de dépôt d'une seconde matière plastique (9) sur la première zone (3) de la coquille (1) et sur au moins une partie de la première portion de peau (7) formée sur la seconde zone (6) de cette coquille, afin de former sur cette première zone (3) de la coquille, une seconde portion de peau (10), reliée à la première portion de peau (7) par la matière plastique déposée sur celle-ci, en vue d'obtenir une peau de revêtement (11) d'une seule pièce comportant au moins deux portions de peau et des segments à une couche et à deux couches de matière plastique, caractérisée en ce que les premiers et seconds moyens (4,8) de dépôt de matière plastique sur la coquille (1) comprennent des premier (4) et second (8) bacs à extrémités ouvertes, de réception de matière plastique, adaptés pour être associés successivement lors de première et seconde opérations de rotomoulage, à la coquille (1), le premier bac (4) de réception de matière plastique étant associé à un voile en forme d'écran (12) constituant les moyens de masquage (2) de la première zone (3) de la coquille, adapté pour s'étendre entre une partie de l'extrémité ouverte de ce premier bac (4) et cette première zone (3) de la coquille (1) pour empêcher le dépôt de matière plastique (5) sur cette première zone (3) lors de la première étape de fabrication de la peau et permettre la mise en place et le dégagement de ces moyens de masquage (2) lors du montage et du démontage du premier bac (4) et de la coquille (11).

2. Installation selon la revendication 1, caractérisée en ce que la matière plastique (5,9) se présente sous la forme d'une poudre.

3. Installation selon la revendication 1 ou 2, caractérisée en ce que le voile en forme d'écran (12) porte au moins au niveau de son bord, des moyens d'étanchéité (13) adaptés pour venir en appui contre la coquille (1) lorsque celle-ci est montée sur le premier bac (4) pour éviter tout dépôt de matière plastique (5) sur la première zone (3) de cette coquille (1) lors de la première étape de fabrication de la peau.

4. Installation selon la revendication 3, caractérisée en ce que les moyens d'étanchéité (13) comprennent des moyens déformables élastiquement.

5. Installation selon la revendication 4, caractérisée en ce que les moyens déformables élastiquement sont sollicités par des moyens de génération d'une pression/dépression, contre la coquille.

6. Installation selon la revendication 4, caractérisée en ce que les moyens déformables élastiquement sont sollicités par des moyens élastiques, contre la coquille.

7. Installation selon l'une quelconque des revendications 3 à 6, caractérisée en ce que les moyens d'étanchéité (13) comprennent au moins un joint (15;19;23) d'appui sur la coquille (1), fixé de façon démontable sur le reste (14;20;24) de ceux-ci pour permettre son remplacement.

8. Installation selon la revendication 7, caractérisée en ce que le joint (15;19;23) est fixé sur le reste (19;20;24) des moyens d'étanchéité par l'intermédiaire d'un mécanisme à queue d'aronde.

9. Installation selon l'une quelconque des revendications 3 à 8, caractérisée en ce que les moyens d'étanchéité (13) comprennent au moins une partie durcissable in situ (17;22) lorsque la coquille (1) est montée sur le premier bac (4) pour permettre la mise de ces moyens d'étanchéité (13) à la forme exacte de la coquille (1).

10. Installation selon l'une quelconque des revendications 3 à 8 et 9, caractérisée en ce que la partie durcissable in situ (17) des moyens d'étanchéité (13) est prévue dans le joint d'appui (15) de ceux-ci.

11. Installation selon l'une quelconque des revendications 3 à 8 et 9, caractérisée en ce que la partie durcissable in situ (22) des moyens d'étanchéité (13) est prévue dans le reste (20) de ceux-ci.

12. Installation selon l'une quelconque des revendications 9,10 ou 11, caractérisée en ce que les moyens d'étanchéité (13) comprennent au moins un canal (16;21;25,26)s'étendant le long d'au moins une partie de ceux-ci et dans lequel est disposée une matière durcissable in situ (17;22).

13. Installation selon l'une quelconque des revendications précédentes, caractérisée en ce que le voile en forme d'écran (12) porte des moyens d'isolation thermique (26) pour limiter la baisse de la température de la première zone (3) de la coquille (1) lors de la première étape de fabrication de la peau.

14. Installation selon l'une quelconque des revendications précédentes, caractérisée en ce que le voile (12) est venue de matière avec le premier bac (4).

15. Installation selon l'une quelconque des revendications 1 à 13, caractérisée en ce que le voile (12) est réalisé séparément du premier bac (4) et est relié à celui-ci lors de la première étape de fabrication de la peau.

16. Installation selon l'une quelconque des revendications précédentes, caractérisée en ce que le voile (12) est adapté pour accoster la coquille (1) au niveau d'une ligne de style (27) de celle-ci.

17. Installation selon l'une quelconque des revendications précédentes, caractérisée en ce que les première et seconde matières plastiques (5,9) présentent au moins une caractéristique différente.

18. Installation selon la revendication 17, caractérisée en ce que les première et seconde matières plastiques présentent des couleurs différentes.

19. Installation selon la revendication 17, caractérisée en ce que les première et seconde matières plastiques présentent des natures différentes.
